# EUROPEAN PATENT APPLICATION

(11) **EP 1 914 017 A2**
(43) Date of publication of application: **23.04.2008**
(21) Application number: 07020146.2
(22) Date of filing: 15.10.2007
(51) Int. Cl.: B09C 1/08, C02F 11/00, B09B 3/00

(54) **Method for treatment of contaminated soils and sediment**

(30) Priority: 19.10.2006 IT MI20062010
(71) Applicant: Mapei S.p.A., 20158 Milano (IT); IN.T.EC. S.R.L., 30172 Mestre (VE) (IT)
(72) Inventor: Ferrari, Giorgio, 20158 Milano (IT); Bravo, Anna, 20158 Milano (IT); Cerulli, Tiziano, 20158 Milano (IT); Pellay, Roberto, 20158 Milano (IT); Zavan, Dino, 20158 Milano (IT)
(74) Representative: Minoja, Fabrizio

(57) **Abstract**

It is described a method for treatment of contaminated soils, sediments and wastes in the muddy or powder form comprising a) a first step of solidification/stabilization producing a solid granular material based on hydraulic binders containing the contaminated soils, sediments and wastes in the muddy or powder form, b) a second step where the solid granular material of the first step is subjected to one ore more of the following treatments: thermal desorption, treatment with biological activated sludge and solvent washing, c) eventually a third step consisting in the grinding of the solid granular material from the previous steps.

## Description

### SCOPE OF THE INVENTION

The present invention is related to a process for the treatment of contaminated soils and sediments, for wastes in muddy or powder form and it the use of the granular materials resulting from the application of this process.

### BACKGROUND OF THE INVENTION

Industrial activities have caused, especially in the past, the severe contamination of many industrial areas where industrial plants have been built and operated and also the contamination of the marine sediments of the coastal areas near these plants. The extent of the contamination depends on both the dimension of the industrial plants and the type of the process and production which are operating or have been operated in the past. The contamination of these areas can be essentially inorganic, i.e. heavy metals, in the vicinity of metallurgical and naval industries, but can be mainly due to organic contaminants (hydrocarbons, etc.) in those areas closer to industries which process and produce organic chemicals, such as refineries, coastal hydrocarbon storage plants, pharmaceuticals industries, etc. Very often, the nature of the contamination is both inorganic and organic because, especially in big industrial areas, petrochemicals plants integrate very different chemical processes which uses both inorganic and organic chemicals. The necessity to carry out the remediation of these areas is due, besides the duty of the law, to the necessity to recover these areas for new destinations, not necessarily productive, once the industrial activity have been ceased.

The most common and diffused techniques for the treatment of soils and sediments where the contamination is mostly due to inorganic compounds are the solidification/stabilization technologies. These processes basically consist in the mixing of the contaminated soil, sediment or waste with a binder, mostly cement or mixture of cement and lime and eventually specific additives, which modify the consistency of the soil, sediment or waste and reduce the leaching of the contaminants during the time. Following these processes, the starting incoherent material (soil, sediment or waste) is transformed into a solid material which is characterized by a reduced leaching of metals, both for the effect of the physical reduction of the porosity due to the binding effect and for their chemical transformation of precipitation. Furthermore, due to the hydration of the cement binder, most of the free water present in the soil, sediment or waste is chemically bound in the hydration products which, in turn, contribute to immobilize the contaminants. By this way, the toxicity of these contaminated materials is sharply reduced and, consequently, it is possible reuse these solidified/stabilized materials as filling materials and aggregates for concrete and other cements are described in mixtures. Examples of such applications are described in international patent application WO2006/097272 A2.

Solidification/stabilization technology has been applied for the treatment of soils, sediments and wastes which are characterized by inorganic contamination, but it is not considered effective for organic contaminants, as in the case of soils, sediments and wastes contaminated by hydrocarbons and other organic compounds. For such kind of contaminants are commonly used other treatment technologies, such as those based on thermal desorption, bioremediation and solvent extraction. Examples of such applications are described in patents CA 2237291, US 6060292, US 6796741 and JP 2006043532.

The application of such technologies suffer many limitations due to the fact that the solid, sediment or waste to be treated are often in mud or powder form. In the case of thermal desorption applied to wet materials, a large amount of energy must be used in order to remove water, which in some cases is more than 50 per cent of the whole material. Furthermore, the material, once dried in the heaters and ovens, produces a lot of powders which need to be completely filtered off by the air stream before the emission in the atmosphere. Both these factors greatly increase the complexity of the process and adversely affect the costs of the whole process.

Biological treatments by means of bacteria to reduce organic matter cannot be applied by mixing the finely divided contaminated materials with activated sludge because, once mixed with the activated sludge in an activated sludge biological plant, the resulting mixture cannot be separated again. For these reasons, "biopile" technologies have been developed. In these processes, a pile made by contaminated soil, sediment or waste is continuously sprayed with a bacteria enriched liquid suspension which, percolating and being recycled through the material of the pile, cause the slow biological degradation of the organic matter. Nevertheless, due to the reduced contact of the bacteria with the mass of the pile, the "biopile" process is very slow and it is generally characterized by a reduced efficiency.

In case of remediation processes based on solvent extraction technology, the presence of large amount of free water in the contaminated material can strongly reduce the power of the solvent due to the formation of emulsions, thus limiting the extraction of contaminants; furthermore, quite complex treatments to recovery the solvent are required in these cases.

### DESCRIPTION OF THE PRESENT INVENTION

The present invention is related to a new method for the treatment and remediation of contaminated soils, sediments and wastes in muddy or powder form, comprising the following processes: a) a first step of solidification/stabilization consisting in the production of a solid granular material made by contaminated soils, sediments and wastes in muddy or powder form and hydraulic binders, b) a second step in which the solid granular material from the first step is subjected to one of the following treatments: thermal desorption, treatment with biological sludge and solvent washing, c) eventually, a third step consisting in the crushing of the solid granular material coming from the previous first and second steps.

The first step of production of a granular solid material based on the contaminated soil, sediment and waste in muddy or powder form is an essential step of the present invention; in fact, not only it allows to reduce the leaching of inorganic contaminants, such as heavy metals, but it also represents an essential requirement for the success of the subsequent treatment processes (thermal desorption, biological treatments and solvent washing), both in terms of operating management of the whole process and in terms of removal of the contamination.

In fact, the thermal treatment of contaminated soils, sediments and wastes in muddy or powder form is greatly improved if the starting material is previously subjected to a solidification/stabilization process, producing a granular material based on hydraulic binders. There are two main reasons for these improvements: first, most of the free water present in the starting material become bound water by reaction with cement and therefore less energy is necessary to remove water by evaporation; second, no powders are produced during the thermal process, which it is known to create serious problems of maintenance and clogging of filter systems to treat the atmospheric stream. These granular material can be conveniently produced according to the teachings of patent application W02006/097272 A2. In this case, the grain dimensions can be properly adjusted by controlling the water content and by the addition of additives, in order to obtain the best granulometric distribution for the next step of the process, also depending on the characteristic of the contaminants to be removed.

Typical examples of hydraulic binders which can be conveniently used in the solidification/stabilization step include Portland cement, high alumina cement, blast furnace, cement, pozzolanic cement o their mixtures, eventually in conjunction with gypsum and/or lime.

The contaminated soils, sediments and wastes in the muddy or powder form typically represent from 10 to 95 per cent, preferably from 30 to 90 per cent of the whole granular solid material.

The thermal treatment of the granular material based on hydraulic binders containing the contaminated soils, sediments and wastes in the muddy or powder form is conveniently conducted at temperatures from 70°C and 450°C, preferably from 100°C and 350°C, at pressure in the range from 5 mm Hg and 760 mm Hg.

The mixtures for the solidification/stabilization process, besides the contaminated soils, sediments and wastes in the muddy and powder form, can further contain superplasticizers, hydrophobic and waterproofing additives, precipitating agents, chelating agents, oxidizing and reducing agents, set and hardening accelerators and retarders, surfactants, air-entraining agents, nutrients based on nitrogen, phosphorous and organic carbon biodegradable compounds. Useful superplasticizers for the present invention are represented, but not limited to, by synthetic polymers based on naphthalene sulfonate condensed with formaldehyde, melamine sulfonate condensed with formaldehyde, lignosulfonate, polycarboxylate polymers such as polyacrylic and polymethacrylic acid and their polyoxyalkylene derivatives, copolymers of acrylic and methacrylic acid and other oxyalkylated monomers, eventually with other monomers such as styrene and styrene derivatives, sulfonated monomers, vinyl monomers, maleic anhydride. The different polymers can be used alone or in combination, if necessary, both in aqueous solution and in powder form, after drying.

The production of the granular material according to the present invention allows to perform very effectively the biological treatment, simply by mixing the proper amount of the granular material with a suspension of activated sludge. At the end of the treatment, the granular material decontaminated by the bacterial mass can be easily separated by the activated sludge by filtration, operation which could not be feasible in the case of a finely divided soils, sediments and wastes. By this way, it is possible to use very high concentration of biological mass, such as that present in activated sludge, and consequently reducing the time of contact and substantially improving the yield of the process in comparison with the traditional "biopile" processes.

Also the solvent extraction process is greatly improved by the preliminary production of a solid granular material from a finely divided soil, sediment and waste. In fact, the transformation of the free water in bound water by the reaction with the inorganic binder, improve the power extraction of the solvent and reduce the formation of emulsions which can create serious drawbacks in the process.

At the end of the process of the present invention, the granular material is depurated by the main organic contaminants, such as hydrocarbons, polychlorodibenzodioxins (PCDD) and polychlorodibenzofurans (PCDF), polychlorobiphenyls (PCB), hexachlorobenzene (HCB), polycyclic aromatic hydrocarbons (PAH) and other volatile compounds such as mercury and mercury compounds; on the other side, non volatile inorganic contaminants such as lead, arsenic, cadmium, copper, chromium, etc. are fixed in the cement matrix of the granular material and cannot be leached. Also the mechanical properties of the solid granular material at the end of the process of the present invention are suitable for their reuse as filling materials for environmental restoration, road rough and aggregate for cement mixtures. In case it is necessary to reuse the material in the finely divided form it had before the process of solidification/stabilization, it is possible to grind the granular material at the desired fineness.

In the following examples are described in details the results of the treatment of the contaminated soils, sediments according the process of the present invention.

### Example 1

In this example the process of solidification/stabilization of the present invention is described using as contaminated material a marine sediment from a coastal area close to a petrochemical plant. The sediment was characterized, from a mineralogical point of view, as a siliceous-carbonaceous matrix with feldspar and argillaceous components. The characteristic of the sediment and its contamination level are shown in Table 1.

**Table 1. Chemical-physical characteristics and degree of contamination of the marine sediment used in this example**

| **Parameter/Contaminant** | **Unit** | **Actual value** |
|---|---|---|
| Dry content | % | 47.9 |
| Mean granulometry | Mm | 15.2 |
| Calcium carbonate (CaCO₃) | % | 33.7 |
| Polychlorodibenzodioxins and Polychlorodibenzofurans (PCDDs/PCDFs) | pg/g dry matter WHO-TE | 120,7 |
| Polychlorobiphenyls "dioxin-like" (DL-PCBs) | pg/g dry matter WHO-TE | 14.0 |
| Total Polychlorobiphenyls (Total PCBs) | ng/g dry matter | 177.4 |
| Hexachlorobenzene (HCB) | ng/g dry matter | 595.6 |
| Polynuclear Aromatic Hydrocarbons (PAHs) | ng/g dry matter | 10604 |
| Hydrocarbons C > 12 | mg/kg dry matter | 5409 |
| Mercury (Hg) | mg/kg dry matter | 41.8 |
| Arsenic (As) | mg/kg dry matter | 204 |
| Cadmium (Cd) | mg/kg dry matter | 11.9 |
| Chromium (Cr) | mg/kg dry matter | 55.1 |
| Copper (Cu) | mg/kg dry matter | 279 |
| Lead (Pb) | mg/kg dry matter | 2321 |

2000 grams of sediment, previously dried at a level of humidity of 15 per cent, were mixed with 667 grams of CEM I 52.5R Portland cement. After the addition of 100 grams of water, mixing was stopped and the aspect of the mixture was like a wet fine powder without agglomerates. After three minutes, 45 grams of a 30 per cent solution of superplasticizer Dynamon SP3 produced by Mapei diluted with 75 grams of water and 45 grams of a 10 per cent solution of calcium stearate were added under mixing. The mixture was then transferred to a mixer with a circular plate of 400 mm diameter rotating at a speed of 150 r.p.m. The granular material formed in the rotating mixture was finished with the addition of 148 grams of CEM I 52.5 Portland cement. 3084 grams of granular material, characterized by spherical shape and smooth surface, is cured for 28 days in controlled conditions at 20°C and relative humidity higher than 95 per cent. During the first 12 hours of curing the granular material is gently shaken to prevent the packing of the grains. The particle size distribution of the granular solid material is shown in Figure and the degree of contamination is reported in Table 2.

**Table 2. Level of contamination of the granular solid material containing the contaminated marine sediment of the present example**

| **Contaminant** | **Unit** | **Actual value** |
|---|---|---|
| Polychlorodibenzodioxins e Polychlorodibenzofurans (PCDDs/PCDFs) | pg/g dry matter WHO-TE | 82,7 |
| Polychlorobiphenyls "dioxin-like" (DL-PCBs) | pg/g dry matter WHO-TE | 9,0 |
| Total Polychlorobiphenyls (Total PCBs) | ng/g dry matter | 112.5 |
| Hexachlorobenzene (HCB) | ng/g dry matter | 385 |
| Polynuclear Aromatic Hydrocarbons (PAHs) | ng/g dry matter | 7211 |
| Hydrocarbons C > 12 | mg/kg dry matter | 3245 |
| Mercury (Hg) | mg/kg dry matter | 27.8 |
| Arsenic (As) | mg/kg dry matter | 132 |
| Cadmium (Cd) | mg/kg dry matter | 7.7 |
| Chromium (Cr) | mg/kg dry matter | 35.7 |
| Copper (Cu) | mg/kg dry matter | 181 |
| Lead (Pb) | mg/kg dry matter | 1505 |

By comparing the value of Table 1 and Table 2, it appears that the level of contamination of the granular material containing the marine sediment (Table 2) is lower than the starting sediment (Table 1), because of the dilution effect of the sediment, which represents about 65 per cent of the whole mass, by the other ingredients which do not produce any significant contamination.

### Example 2

The solid granular material containing the contaminated sediment of Example 1 has been subjected to different thermal treatments. In the first experiment, 100 grams of solid granular material have been heated for 1 hour at the temperature of 200°C (Sample A); in the second experiment 100 grams of solid granular material have been heated for 1 hour at 350°C (Sample B) and in the third experiment 100 grams of solid granular material have been heated for 2 hours at 160°C at a reduced pressure of 20 mmHg (Sample 3). After the thermal treatments, all the samples resulted entire and with mechanical characteristics comparable with those of the starting granular material, as measured by ACV (Aggregate Crushing Value) according BS 812-110 British Standard method. The level of the contamination of samples A, B and C after the thermal treatments is compared in Table 3 with that of the granular solid material before any treatment.

**Table 3. Mechanical characteristics and contamination of the solid granular material containing the marine sediment of Example 1 and the Samples A, B and C where the sample of Example 1 has been subjected to different thermal treatments**

| **Characteristic/ Contaminant** | **Unit** | **Example 1** | **Sample A** | **Sample B** | **Sample C** |
|---|---|---|---|---|---|
| Crushing Resistance (ACV) | % | 32 | 31 | 38 | 32 |
| Polychlorodibenzodioxins e Polychlorodibenzofurans (PCDDs/PCDFs) | pg/g dry matter WHO-TE | 82,7 | 92.5 | 23.36 | 13.2 |
| Polychlorobiphenyls "dioxin-like" (DL-PCBs) | pg/g dry matter WHO-TE | 9.0 | 4.4 | 0.03 | n.r. |
| Total Polychlorobiphenyls (Total PCBs) | ng/g dry matter | 112.5 | 64.0 | 1 | n.r. |
| Hexachlorobenzene (HCB) | ng/g dry matter | 385 | 55 | 6 | n.r. |
| Polynuclear Aromatic Hydrocarbons (PAHs) | ng/g dry matter | 7211 | 2241 | 532 | 333 |
| Hydrocarbons C > 12 | mg/kg dry matter | 3245 | 670 | 30 | 1 |
| Mercury (Hg) | mg/kg dry matter | 27.8 | 26.5 | 3 | 2 |
| Arsenic (As) | mg/kg dry matter | 132 | 147.6 | 155.2 | 148.7 |
| Cadmium (Cd) | mg/kg dry matter | 7.7 | 8.6 | 9.5 | 8.8 |
| Chromium (Cr) | mg/kg dry matter | 35.7 | 39.9 | 40.3 | 40.1 |
| Copper (Cu) | mg/kg dry matter | 181 | 202 | 220 | 205 |
| Lead (Pb) | mg/kg dry matter | 1505 | 1683 | 1750 | 1643 |

| | | | | | |
|---|---|---|---|---|---|
| n.d. = not detectable | | | | | |

The results of this example clearly show that the thermal treatments of the granular solid material containing the contaminated marine sediment of Example 1 produce the desorption of organic contaminants and volatile elements. In fact, by heating the material at 200°C for 1 hour at a pressure of 760 mmHg (sample A), it is possible to remove more than 85 per cent of HCB, 43 per cent of PCBs, 69 per cent of PAHs, 79 per cent of Hydrocarbons C>12 and 4 per cent of mercury, while the other not volatile contaminants are not influenced by this treatment. The increase of the level of the contamination observed for PCDDs/PCDFs and for the other metals is due to concentration effect caused by the evaporation of the fraction of water which is not chemically bound. By heating the solid granular material at 350°C for 1 hour at a pressure of 760 mmHg (Sample B), the yield of the thermal treatment is remarkably improved, with a reduction of 98 per cent for HCB, more than 99 per cent for PCBs, 93\per cent for PAHs, 99 per cent for Hydrocarbon >C12, 98 per cent for mercury and 72 per cent for PCDDs/PCDFs, without any relevant reduction for the other non volatile metals. Sample C, treated at 160°C for 1 hour at a reduced pressure of 20 mmHg, resulted completely decontaminated from HCB, PCBs and Hydrocarbons C>12, while PAH were removed at 95 per cent, mercury at 92 per cent and PCDDs/PCDFs at 84 per cent. It is important to observe that the mechanical properties are non affected by the thermal treatments, as confirmed by the ACV values, which are comparable with the original sample (Example 1). This aspect is of paramount importance for both the management of the thermal desorption process (thus preventing the grains fragmentation and the consequent formation of powder material which increase the maintenance of the emissions abatement systems) and for the possibility of reuse of the granular material. The yield of the removal of the different contaminants in the different tests is summarized in Table 4.

**Table 4. Per cent of removal of the different contaminants by thermal desorption of the solid granular material containing the contaminated marine sediment of Example 1 in different conditions (Sample A: 200°C for 1 hour at 760 mm Hg, Sample B: 350°C for 1 hour at 760 mm Hg, Sample C: 160°C for 2 hours at 20 mm Hg)**

| **Contaminant** | **Sample A** | **Sample B** | **Sample C** |
|---|---|---|---|
| | **Per cent of removal (%)** | | |
| Polychlorodibenzodioxin and Polychlorodibenzofurans (PCDDs/PCDFs) | 0 | 72 | 84 |
| Polychlorobiphenyls "dioxin like" (DL-PCB) | 51 | > 99 | 100 |
| Total Polychlorobiphenyls (Total PCBs) | 43 | > 99 | 100 |
| Hexachlorobenzene (HCB) | 86 | 98 | 100 |
| Polynuclear Aromatic Hydrocarbons (PAHs) | 69 | 93 | 95 |
| Hydrocarbons C > 12 | 79 | 99 | 100 |
| Mercury (Hg) | 4 | 89 | 92 |
| Arsenic (As) | 0 | 0 | 0 |
| Cadmium (Cd) | 0 | 0 | 0 |
| Chromium (Cr) | 0 | 0 | 0 |
| Copper (Cu) | 0 | 0 | 0 |
| Lead (Pb) | 0 | 0 | 0 |

### Example 3

In this example, 125 grams of the solid granular material containing the contaminated sediment of Example 1 have been mixed for 7 days with 2 liter of activated sludge previously aerated for 2 hours. The pH of the mixture was kept at pH = 7 ± 1 by the addition of the proper amount of HCl or NaOH. After this time, the granular material has been recovered by filtration and washed with water (Sample D). The concentration of Hydrocarbon C > 12 and PAH in the granular material after the biological treatment is shown in Table 5.

**Table 5. Efficiency of the biological treatment of the solid granular material containing the contaminated sediment of Example 1 (Sample D)**

| **Contaminant** | **Example 1** | **Sample D** | |
|---|---|---|---|
| | mg/kg dry | mg/kg dry | Yield of the process (%) |
| Polynuclear Aromatic Hydrocarbons (PAHs) | 1157 | 70 | 93 |
| Hydrocarbons C > 12 | 5409 | 20.8 | > 99 |

### Example 4

This example demonstrate the extremely low level of leaching of non volatile inorganic contaminants in the solid granular material, which cannot be removed by thermal desorption of Example 2. The fraction of Sample C of Example 2 passing the sieve mesh of 4 mm (previously treated at 160°C for 2 hours at a reduced pressure of 20 mmHg) is tested for the leaching according to the Italian decree of Ministry of the Environment date 5 February 1998 for reusable materials. The results of the test are reported in the following Table 6.

**Table 6. Leaching test according to Decree 5 February 1998 on the solid granular material of the present invention (Sample C of Example 2)**

| **Contaminant** | **Time of leaching (hours)** | | | | | | | | **ΣCi** | **CL** |
|---|---|---|---|---|---|---|---|---|---|---|
| | **2** | **8** | **24** | **48** | **72** | **102** | **168** | **384** | | |
| **As (ppb)** | <1 | <1 | <1 | <1 | <1 | <1 | <1 | <1 | <8 | 50 |
| **Cd (ppb)** | <0.2 | <0.2 | <0.2 | <0.2 | <0.2 | <0.2 | <0.2 | <0.2 | <1.6 | 5 |
| **Cr (ppb)** | <1 | <1 | <1 | <1 | <1 | <1 | <1 | <1 | <8 | 50 |
| **Cu (ppb)** | 1.2 | 1.2 | 1.9 | 2.4 | 1.9 | 2.0 | 3.7 | 4.4 | 18.7 | 50 |
| **Pb (ppb)** | 2.5 | 3.1 | 4.4 | 4.3 | 3.3 | 3.1 | 4.5 | 6.8 | 32.0 | 50 |

The results of Table 6 clearly indicate that the cumulative leaching (ΣCi) of the different contaminants, expressed in ppb, are much lower in comparison with the cumulative limit of concentration (CL) fixed by the Decree 5 February 1998 for reusable materials. As comparison, in the following table are shown the leaching test according to the same Decree for the untreated marine contaminated sediment.

**Table 7. Leaching test according to Decree 5 February 1998 on the untreated contaminated marine sediment**

| **Parameter** | **Time of leaching (hrs)** | | | | | | | | **ΣCi** | **CL** |
|---|---|---|---|---|---|---|---|---|---|---|
| | **2** | **8** | **24** | **48** | **72** | **102** | **168** | **384** | | |
| **As (ppb)** | 108 | 85 | 97 | 159 | 135 | 156 | 180 | 334 | 1254 | 50 |
| **Cd (ppb)** | <0.2 | 0.3 | <0.2 | 0.5 | 0.4 | 0.5 | 0.7 | 1.1 | 3.9 | 5 |
| **Cr (ppb)** | 4.3 | 4.6 | 6.5 | 8.6 | 7.1 | 5.9 | 9.2 | 17.8 | 64.0 | 50 |
| **Cu (ppb)** | 24.3 | 14.4 | 11.0 | 20.7 | 19.6 | 16.0 | 23.9 | 45.1 | 175 | 50 |
| **Pb (ppb)** | 3.0 | 17.6 | 10.6 | 27.0 | 20.0 | 24.1 | 35.2 | 80.2 | 217.7 | 50 |

The results of Table 6 and Table 7 clearly indicate that mainly for arsenic, lead, chromium copper and cadmium, the leaching of inorganic contaminants of the material treated according the process of the present invention is extremely reduced, in many cases below the detection limits of the analytical method. These results confirm the excellent environmental results due to the production of the granular materials of the present invention, characterized by low porosity and high mechanical characteristics.

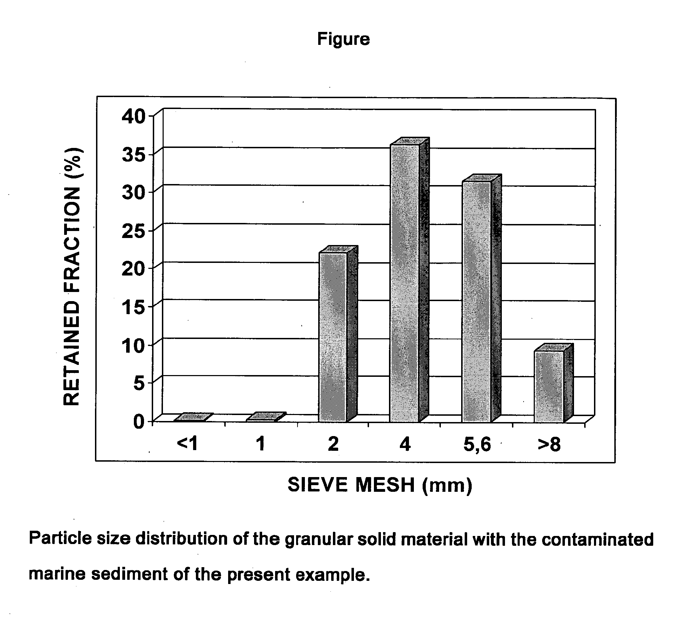

## Claims

1. Method for treatment of contaminated soils, sediments and wastes in muddy or powder form comprising a) a first step of solidification/stabilization producing a solid granular material based on hydraulic binders containing the contaminated soils, sediments and wastes in the muddy or powder form, b) a second step where the solid granular material of the first step is subjected to one ore more of the following treatments: thermal desorption, treatment with biological activated sludge and solvent washing, c) eventually a third step consisting in the grinding of the solid granular material from the previous steps.

2. Method according Claim 1 where in the solidification/stabilization step are added superplasticizers, hydrophobic and waterproofing agents, precipitating agents, chelating agents, oxidizing agents, reducing agents, setting and hardening accelerators, setting and hardening retarders, surfactants, air entraining agents, nutrients based on nitrogen and phosphorous and biodegradable organic compounds.

3. Method according Claims 1 and 2 where the hydraulic binders used in the step of solidification/stabilization are Portland cement, high alumina cement, blast furnace slag cement, pozzolanic cement or their mixtures, eventually in conjunction with gypsum and/or lime.

4. Method according any of Claims 1 to 3 where contaminated soils, sediments and wastes in muddy or powder form represent from 10 to 95 per cent, preferably from 30 to 90 per cent of the solid granular material.

5. Method according any of the Claims 1 to 4 where the solid granular material based on hydraulic binders and contaminated soils, sediments and wastes in muddy or powder form is subjected to a thermal treatment at temperatures from 70°C and 450°C, preferably from 100°C to 350°C and at a pressure from 5 mmHg and 760 mmHg.

6. Use of the solid granular material obtained according any of Claims 1 to 5 for the production of road rough, as filling material and as aggregate for the production of cement mixtures.
